# EUROPÄISCHE PATENTSCHRIFT

(11) **EP 0 540 946 B1**
(45) Veröffentlichungstag und Bekanntmachung des Hinweises auf die Patenterteilung: **14.01.1998**
(21) Anmeldenummer: 92118055.0
(22) Anmeldetag: 22.10.1992
(51) Int. Cl.: H04L 7/033, H04L 7/02

(54) **Verfahren zur digitalen Nachrichtenübertragung**
Method for the digital transmission of information
Méthode pour la transmission digitale d'informations

(30) Priorität: 06.11.1991 DE 4136474
(43) Veröffentlichungstag der Anmeldung: 12.05.1993
(73) Patentinhaber: ALCATEL ALSTHOM COMPAGNIE GENERALE D'ELECTRICITE, 75382 Paris Cédex 08 (FR)
(72) Erfinder: Guba, Winfried, Dr., W-3000 Hannover 91 (DE); Ernst, Detlef, W-3014 Laatzen (DE)
(74) Vertreter: Döring, Roger, Dipl.-Ing.

(56) Entgegenhaltungen:
- EP-A- 0 249 931
- FREQUENZ Bd. 35, Nr. 9 , September 1981 , BERLIN DE Seiten 236 - 242 TRÖNDLE K ET AL 'Kompensation des systematischen Jitters bei der Taktgewinnung aus Digitalsignalen'

## Beschreibung

Die Erfindung bezieht sich auf ein Verfahren zur digitalen Nachrichtenübertragung, bei welchem die übertragenen Signale am Ende der Übertragungsstrecke mittels einer Taktgewinnungseinrichtung abgetastet und anschließend weiterverarbeitet sowie einem Entscheider zugeführt werden (US-Z "IEEE TRANSACTIONS ON COMMUNICATIONS", VOL. COM-35, NO. 9, September 1987, Seiten 961 bis 968).

Signale zur Nachrichtenübertragung können mit einem derartigen Verfahren leitungsgebunden oder drahtlos übertragen werden. Für die leitungsgebundene Übertragung werden Kabel mit elektrischen oder optischen Übertragungswegen eingesetzt. Die drahtlose Übertragung erfolgt beispielsweise über Richtfunk oder Satellitenfunk. Durch Variation der Übertragungsfunktion des Übertragungskanals, beispielsweise durch Änderung der Länge eines Kabels mit metallischen Leitern, ändert sich nicht nur die Form der empfangenen Signale (Impulse), sondern es verschiebt sich auch die zeitliche Lage des jeweiligen Impulsmaximums. Die gesamte Impulsformung wird außerdem durch die Temperaturdrift und die Toleranzen der in Sender- und Empfänger eingesetzten Bauteile bzw. des Kabels beeinflußt. Sie ist somit zeitabhängig und einer gewissen Streuung unterworfen. Bei synchron betriebenen, in einem Kabel zusammengefaßten Übertragungssystemen treten weiterhin zyklisch stationäre Störungen auf, deren Leistung zeitlich periodisch schwankt. Diese Störungen sind in der DE-Z "FREQUENZ" 45 (1991) 1-2, Seiten 15 bis 22 beschrieben. Das Verhältnis von Nutzsignal zu Störsignal (Störabstand) und damit die erreichbare Bitfehlerhäufigkeit bzw. die überbrückbare Entfernung der Signalübertragung hängen wesentlich von den geschilderten Einflußgrößen ab. In allen Fällen muß sichergestellt sein, daß beim Abtasten der beim Empfänger ankommenden Signale noch eine weiterverarbeitbare Größe gewonnen wird, die eine vorgegebene Grenzen nicht überschreitende Bitfehlerhäufigkeit garantiert. Dabei ist auch die Lage des Abtastzeitpunkts von Bedeutung.

Aus der EP 0 249 931 A2 geht eine Schaltungsanordnung mit einer Entscheiderschaltung für ein mehrstufiges QAM-System hervor. Das empfangene und demodulierte Signal wird hier einem A/D-Wandler zugeführt, an den ein Bitfehlergenerator angeschlossen ist. Die von dem Bitfehlergenerator gewonnene Information wird einem veränderbaren Phasenschieber aufgegeben, durch welchen gegebenfalls der Abtastzeitpunkt für das empfangene Signal verändert wird.

Bei anderen bekannten Verfahren bzw. Schaltungen werden der Zeitpunkt der Abtastung bzw. die Taktphase im allgemeinen bei der Fertigung der jeweiligen Baugruppen einmalig abgeglichen. Das bedeutet nicht nur zusätzliche Abgleicharbeit, sondern die oben geschilderten Einflußgrößen werden dabei nur unzureichend oder garnicht berücksichtigt.

Aus der eingangs erwähnten US-Z "IEEE TRANSACTIONS ON COMMUNICATIONS" sind außer dem grundsätzlichen Aufbau einer Schaltung mit Abtastung der Signale und Zuführung derselben zu einem Entscheider keine Maßnahmen beschrieben, mit denen die oben erwähnten Einflußgrößen berücksichtigt werden. Das gilt auch für das in der oben ebenfalls erwähnten DE-Z "FREQUENZ" beschriebene Verfahren, mit welchem die vom Abtaster gelieferten Abtastwerte unter Verwendung eines linearen und eines entscheidungsrückgekoppelten Entzerrers sowie eines Störwertprädiktors mit relativ hohem schaltungstechnischem Aufwand weiterverarbeitet werden.

Der Erfindung liegt die Aufgabe zugrunde, das eingangs geschilderte Verfahren so weiterzubilden, daß die Einhaltung einer zulässigen Bitfehlerhäufigkeit sichergestellt ist und die Reichweite der Übertragung vergrößert werden kann.

Diese Aufgabe wird gemäß der Erfindung dadurch gelöst,
- daß das Eingangssignal und das Ausgangssignal des Entscheiders einem Summierpunkt zugeführt werden,
- daß die Differenzwerte der beiden Signale des Entscheiders vom Summierpunkt aus einer Steuereinheit aufgegeben werden,
- daß in der Steuereinheit ständig ein Mittelwert aus den Differenzwerten gebildet wird,
- daß von der Steuereinheit ein den Abtastzeitpunkt verschiebender, mit der Taktgewinnungseinrichtung gekoppelter Phasenschieber jeweils dann in der Phase verstellt wird, wenn der jeweilige Mittelwert stabilisiert ist und
- daß der Betrag, um den der Phasenschieber jeweils verstellt wird, durch Vergleich des jeweils neuen stabilen Mittelwerts mit dem für die vorangehende Verstellung des Phasenschiebers verwendeten stabilen Mittelwert ermittelt wird, wobei eine Verstellung der Phase bei gegenüber dem vorangehenden stabilen Mittelwert kleinerem neuem Mittelwert in der gleichen Richtung wie vorher und bei größerem neuem Mittelwert in entgegengesetzter Richtung erfolgt.

Neben der Taktgewinnungseinrichtung wird also ein Phasenschieber eingesetzt, der durch eine Steuereinheit, beispielsweise einen Mikrokontroller, gesteuert wird. Der Steuereinheit werden von dem Summierpunkt die Differenzwerte zwischen den Signalen am Eingang des Entscheiders einerseits und am Ausgang desselben andererseits zugeführt. Die Steuereinheit bildet aus den ihr zugeführten Differenzwerten einen Mittelwert - beispielsweise den quadratischen Mittelwert oder den Betragsmittelwert - und verstellt nach Stabilisierung desselben den Phasenschieber um einen vorgebbaren Betrag. Maßgeblich für den Zeitpunkt einer Verstellung des Phasenschiebers ist, daß das System sich nach einer Verstellung jeweils wieder im eingeschwungenen Zustand befindet, so daß ein stabiler Mittelwert der Differenzwerte gegeben ist. Der Abtastzeitpunkt wird also ständig den jeweiligen Gegebenheiten angepaßt. Durch die damit erreichte adaptive Nachregelung wird grundsätzlich im optimalen Zeitpunkt abgetastet. Alle Änderungen während der Übertragung werden automatisch berücksichtigt. Das gilt insbesondere auch für zyklisch stationäre Nebensprechstörungen. Ein Abgleich von in Sender und Empfänger eingesetzten Bauteilen ist nicht erforderlich. Die Bitfehlerhäufigkeit kann daher gegenüber bekannten Vefahren reduziert werden und die Reichweite der über ein Kabel zu übertragenden Signale kann dementsprechend erhöht werden.

Das Verfahren nach der Erfindung wird anhand der Zeichnungen als Ausführungsbeispiel erläutert.

Es zeigen:
Fig. 1 in schematischer Darstellung einen Empfänger einer digitalen Übertragungsstrecke.
Fig. 2 eine Schaltung zur Durchführung des Verfahrens nach der Erfindung.
Fig. 3 ein Flußdiagramm für den Ablauf des Verfahrens.

Das Verfahren nach der Erfindung ist - wie eingangs bereits erwähnt - sowohl bei der leitungsgebundenen Nachrichtenübertragung über elektrische oder optische Kabel als auch bei der drahtlosen Nachrichtenübertragung einsetzbar. Von besonderer Bedeutung ist das Verfahren bei der Nachrichtenübertragung über elektrische Kabel, in denen symmetrische Doppeladern mit metallischen Leitern zusammengefaßt sind. Im folgenden wird daher - stellvertretend für die anderen Übertragungsmöglichkeiten - das elektrische Kabel als Übertragungsmedium berücksichtigt.

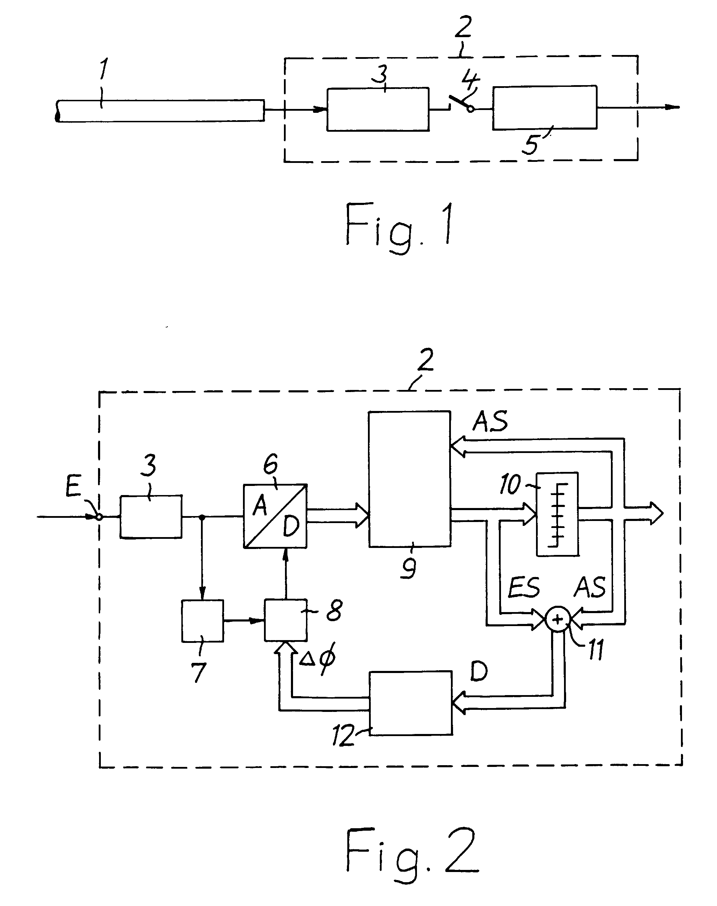

Die verzerrten und von Störungen überlagerten digitalen Signale gelangen gemäß Fig. 1 von einem Kabel 1 zu einem Empfänger 2, der ein Empfangsfilter 3, eine Abtastvorrichtung 4 und einen Detektor 5 aufweist. Die genauere Ausbildung des Empfängers 2 geht aus Fig. 2 hervor:

Mit dem Eingang E des Empfängers 2 ist über das Empfangsfilter 3 ein Analog/Digital-Wandler (A/D-Wandler) 6 verbunden, der die Abtastvorrichtung 4 enthält. Auf den A/D-Wandler 6 wirkt ein mit einer Taktgewinnungseinrichtung 7 verbundener Phasenschieber 8 ein. An den A/D-Wandler 6 ist der eine Filter-Einheit 9 und einen Entscheider 10 aufweisende Detektor 5 angeschlossen. Durch den Entscheider 10 werden aus den von der Filter-Einheit 9 gelieferten, aufbereiteten Signalen die ursprünglich gesendeten Quellensignale zurückgewonnen. Einem Summierpunkt 11 werden Eingangssignal ES und Ausgangssignal AS des Entscheiders 10 zugeführt. Das Ausgangssignal AS des Entscheiders 10 kann außerdem der Filter-Einheit 9 zur Auswertung aufgegeben werden. Das im Summierpunkt 11 erzeugte Differenzsignal D wird einer Steuereinheit 12 aufgegeben, die ihrerseits den Phasenschieber 8 ansteuert.

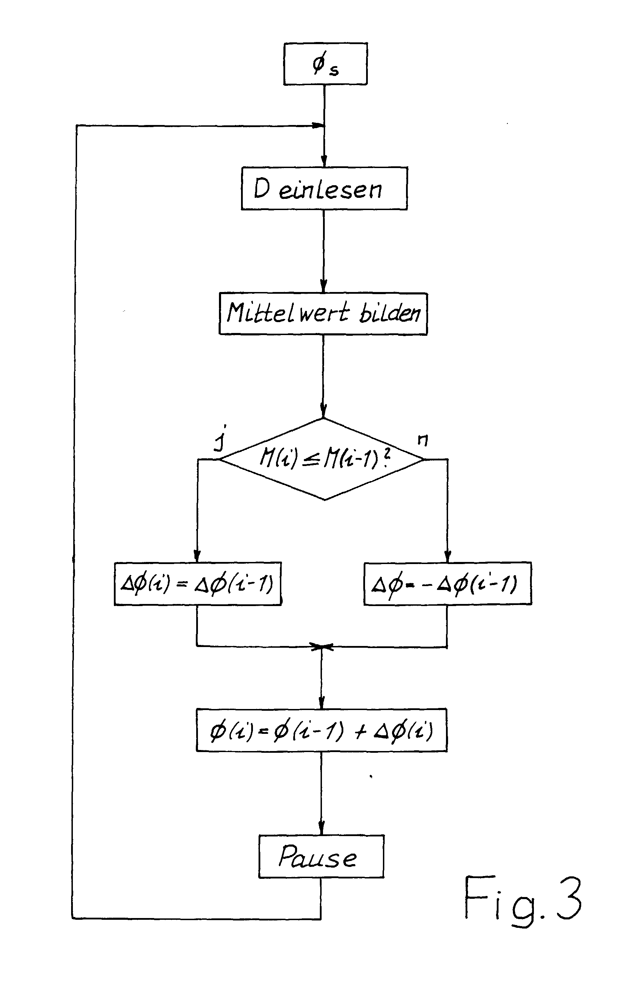

Die Schaltung nach Fig. 2 arbeitet entsprechend Fig. 3 wie folgt:

Zu Beginn der Übertragung (Start) wird der Phasenschieber 8 grob eingestellt. Der entsprechende Wert ist in der Steuereinrichtung 12 als Startwert φₛ gespeichert. Das von dem A/D-Wandler 6 ausgegebene digitale Signal gelangt nach Abtastung und Aufbereitung durch die Filter-Einheit 9 zum Entscheider 10. Dessen Eingangssignal ES und Ausgangssignal AS werden dem Summierpunkt 11 aufgegeben, der aus den beiden zugeführten Signalen die Differenzwerte D bildet. Die Differenzwerte D werden der Steuereinrichtung 12 zugeführt. Sie bildet aus den Differenzwerten D einen Mittelwert. Wenn der Mittelwert stabil ist, wird der Phasenschieber 8 nach Maßgabe des zum Zeitpunkt "i" gegebenen stabilen Mittelwerts M(i) um einen Betrag Δφ in der Phase verstellt.

Dadurch wird der Abtastzeitpunkt in der Phase verschoben. Die Signale von A/D-Wandler 6 und Filter-Einheit 9 ändern sich. Über den Summierpunkt 11 werden der Steuereinheit 12 weiter Differenzwerte D zugeführt. Sie bildet daraus weiter Mittelwerte. Jeder stabile Mittelwert M(i), der zu einer Verstellung des Phasenschiebers 8 führt, kann in der Steuereinheit 12 gespeichert werden.

Der Betrag Δφ, um den der Phasenschieber 8 jeweils verstellt wird, ist den Gegebenheiten anzupassen. Er soll nicht zu klein sein, damit die Adaption des optimalen Abtastzeitpunkts nicht zu lange dauert. Andererseits ist ein zu großer Betrag Δφ nicht sinnvoll, da die Adaption dann möglicherweise dauernd hin- und herschwankt und das Optimum u. U. nicht erreicht wird. In bevorzugter Ausführungsform bleibt der Betrag Δφ, um den der Phasenschieber 8 verstellt wird, jeweils gleich. In sinnvoller Betrag für Δφ liegt beispielsweise bei 1 % der gesamten Taktphase. Der Betrag Δφ kann aber auch variabel sein. Das kann zweckmäßig sein, wenn größere Abweichungen auftreten.

Wenn nach einer Verstellung des Phasenschiebers 8 ein neuer stabiler Mittelwert M(i) erreicht ist, dann kann eine weitere Verstellung des Phasenschiebers 8 um den gleichen Betrag wie vorher vorgenommen werden. Dazu wird zunächst der neue stabile Mittelwert M(i) mit dem vorangehenden, für eine Verstellung des Phasenschiebers 8 verwendeten stabilen Mittelwert M(i-1) verglichen. Wenn der neue Mittelwert M(i) kleiner ist als der vorangehende, dann war die Verstellung der Phase des Abtastzeitpunkts um den Betrag Δφ in der richtigen Richtung. Die nächste Verstellung um den Betrag Δφ erfolgt dann in der gleichen Richtung. Ist der neue Mittelwert M(i) hingegen größer als der vorangehende, dann wird die Phase in entgegengesetzter Richtung um den Betrag Δφ verstellt. Der Zeitpunkt der Verstellung kann außerdem von der Steuereinheit 12 vorgegeben werden. Eine Verstellung erfolgt auf jeden Fall erst dann, wenn das System eingeschwungen und damit der jeweilige Mittelwert M(i) stabil ist. Zwischen zwei Verstellungen des Abtastzeitpunkts liegt dementsprechend eine Pause.

Als Phasenschieber 8 können beispielsweise digitale Verzögerungsschaltungen oder Laufzeitglieder eingesetzt werden. Die Filter-Einheit 9 besteht vorzugsweise aus Digitalfiltern. Solche Filter sind beispielsweise in der eingangs erwähnten DE-Z "FREQUENZ" beschrieben.

Bei dem Entscheider 10 kann es sich um ein in der Technik der Nachrichtenübertragung bekanntes Bauteil handeln, wie beispielsweise ein Komparator oder eine Logikschaltung.

Die Steuereinheit 12 kann ein intelligenter Baustein mit Speichern sein, beispielsweise ein Mikroprozessor oder ein Mikrokontroller. Es können aber auch Gatearrays oder andere Logikschaltungen eingesetzt werden.

## Patentansprüche

1. Verfahren zur digitalen Nachrichtenübertragung, bei welchem die übertragenen Signale am Ende der Übertragungsstrecke mittels einer Taktgewinnungseinrichtung (7) abgetastet und anschließend weiterverarbeitet sowie einem Entscheider (10) zugeführt werden,
dadurch gekennzeichnet,
- daß das Eingangssignal (ES) und das Ausgangssignal (AS) des Entscheiders (10) einem Summierpunkt (11) zugeführt werden,
- daß die Differenzwerte (D) der beiden Signale (ES,AS) des Entscheiders (10) vom Summierpunkt (11) aus einer Steuereinheit (12) aufgegeben werden,
- daß in der Steuereinheit (12) ständig ein Mittelwert aus den Differenzwerten (D) gebildet wird,
- daß von der Steuereinheit (12) ein den Abtastzeitpunkt verschiebender, mit der Taktgewinnungseinrichtung (7) gekoppelter Phasenschieber (8) jeweils dann in der Phase verstellt wird, wenn der jeweilige Mittelwert stabilisiert ist und
- daß der Betrag (Δø), um den der Phasenschieber (8) jeweils verstellt wird, durch Vergleich des jeweils neuen stabilen Mittelwerts (M(i)) mit dem für die vorangehende Verstellung des Phasenschiebers (8) verwendeten stabilen Mittelwert (M(i-1)) ermittelt wird, wobei eine Verstellung der Phase bei gegenüber dem vorangehenden stabilen Mittelwert (M(i-1)) kleinerem neuem Mittelwert (M(i)) in der gleichen Richtung wie vorher und bei größerem neuem Mittelwert (M(i)) in entgegengesetzter Richtung erfolgt.

2. Verfahren nach Anspruch 1, dadurch gekennzeichnet, daß der Phasenschieber (8) jeweils um einen gleichbleibenden Betrag (Δø) in der Phase verschoben wird.

3. Schaltungsanordnung zur Durchführung des Verfahrens nach Anspruch 1 oder 2, bei welcher am Ende eines Übertragungskanals eine Abtastvorrichtung (4) mit einer Taktgewinnungseinrichtung (7), eine Filter-Einheit (3) und ein Entscheider (10) angeschlossen sind, dadurch gekennzeichnet,
- daß Eingang und Ausgang des Entscheiders (10) mit einem Summierpunkt (11) verbunden sind, von dem Differenzwerte (D) aus den Eingangssignalen (ES) und den Ausgangssignalen (AS) des Entscheiders (10) gebildet werden,
- daß an den Summierpunkt (11) eine Steuereinheit (12) angeschlossen ist, der die Differenzwerte (D) des Summierpunktes (11) zugeführt werden und in der ständig ein Mittelwert aus den Differenzwerten (D) gebildet wird und
- daß an die Steuereinheit (12) ein mit der Taktgewinnungseinrichtung (7) verbundener, den Abtastzeitpunkt verschiebender Phasenschieber (8) angeschlossen ist, wobei die Steuereinheit (12) derart gestaltet ist, daß der Phasenschieber (8) von ihr jeweils dann in der Phase verstellt wird, wenn der jeweilige Mittelwert stabilisiert ist, mit der Maßgabe, daß der Betrag (Δø), um den der Phasenschieber (8) jeweils verstellt wird, durch Vergleich des jeweils neuen stabilen Mittelwerts (M(i)) mit dem für die vorangehende Verstellung des Phasenschiebers (8) verwendeten stabilen Mittelwert (M(i-1)) ermittelt wird, wobei eine Verstellung der Phase bei gegenüber dem vorangehenden stabilen Mittelwert (M(i-1)) kleinerem neuem Mittelwert (M(i)) in der gleichen Richtung wie vorher und bei größerem neuem Mittelwert (M(i)) in entgegengesetzter Richtung erfolgt.

4. Verwendung des Verfahrens nach Anspruch 1 oder 2 für die leitungsgebundene Nachrichtenübertragung.

5. Verwendung des Verfahrens nach Anspruch 1 oder 2 für die Nachrichtenübertragung mit in einem elektrischen Kabel zusammengefaßten symmetrischen Doppeladern mit metallischen Leitern.

## Claims

1. Method for digital telecommunication, in which the transmitted signals at the end of the transmission path are sampled by means of a timing extraction device (7) and then further processed and are also fed to a discriminator (10), characterized
- in that the input signal (ES) and the output signal (AS) of the discriminator (10) are fed to a summation point (11),
- in that the differential value (D) of the two signals (ES, AS) of the discriminator (10) are supplied from the summation point (11) to a control unit (12),
- in that a mean value is continuously formed in the control unit (12) from the differential values (D),
- in that a phase shifter (8) which shifts the sampling instant and is coupled to the timing extraction device (7) is adjusted in phase by the control unit (12) whenever the respective mean value has been stabilized and
- in that the amount (ΔØ) by which the phase shifter (8) is adjusted in each case is determined by comparing the respective new stable mean value (M(i)) with the stable mean value (M(i-1)) used for the preceding adjustment of the phase shifter (8), an adjustment of the phase taking place in the case of a smaller new mean value (M(i)) compared with the preceding stable mean value (M(i-1)) in the same direction as before and in the opposite direction in the case of a greater new mean value (M(i)).

2. Method according to Claim 1, characterized in that the phase shifter (8) is shifted in phase in each case by a constant amount (ΔØ).

3. Circuit arrangement for carrying out the method according to Claim 1 or 2, in which a sampling device (4) having a timing extraction device (7), a filter unit (3) and a discriminator (10) are connected to the end of a transmission channel, characterized
- in that input and output of the discriminator (10) are connected to a summation point (11) by which differential values (D) are formed from the input signals (ES) and the output signals (AS) of the discriminator (10),
- in that there is connected to the summation point (11) a control unit (12) to which the differential values (D) of the summation point (11) are fed and in which a mean value is continuously formed from the differential values (D) and
- in that a phase shifter (8) which is connected to the timing extraction device (7) and shifts the sampling instant is connected to the control unit (12), the control unit (12) being designed so that the phase shifter (8) is adjusted in phase by it whenever the respective mean value has been stabilized, with the proviso that the amount (ΔØ) by which the phase shifter (8) is adjusted in each case is determined by comparing the respective new stable mean value (M(i)) with the stable mean value (M(i-1)) used for the preceding adjustment of the phase shifter (8), an adjustment in the phase taking place in the case of a smaller new mean value (M(i)) compared with the preceding stable mean value (M(i-1)) in the same direction as before and in the opposite direction in the case of a greater new mean value (M(i)).

4. Use of the method according to Claim 1 or 2 for line-connected telecommunication.

5. Use of the method according to Claim 1 or 2 for telecommunication using balanced pairs combined in an electrical cable and having metallic conductors.

## Revendications

1. Procédé de transmission d'informations numériques, pour lequel les signaux transmis parvenant en fin de voie de transmission sont scrutés par un dispositif de récupération d'horloge (7) et ensuite traités et dirigés vers un circuit de décision (10), caractérisé par le fait que :
- le signal d'entrée (ES) et le signal de sortie (AS) du circuit de décision (10) sont dirigés vers un totalisateur (11).
- la valeur de la différence (D) entre les deux signaux (ES et AS) du circuit de décision (10) sont transférés du totalisateur (11) vers une unité de-contrôle (12).
- cette unité de contrôle (12) détermine en permanence la valeur moyenne des différences (D).
- l'unité de contrôle (12) décale un déphaseur (8), couplé avec le dispositif de récupération d'horloge (7) en déplaçant l'instant de scrutation, chaque fois que la valeur moyenne de la phase est stabilisée, et
- la valeur (ΔØ) de décalage du déphaseur (8) est obtenue à chaque fois par comparaison de la nouvelle valeur moyenne stabilisée (M(i)) avec l'ancienne valeur stabilisée (M(i-1)) utilisée pour le précédent décalage du déphaseur (8), et que le décalage de la phase dans le cas où la nouvelle valeur moyenne (M(i)) est inférieure à l'ancienne valeur moyenne (M(i-1)) s'effectue dans la même direction que précédemment et dans le cas où la nouvelle valeur moyenne (M(i)) est supérieure, dans la direction opposée.

2. Procédé selon la revendication 1, caractérisé par le fait que le déphaseur (8) est toujours décalé d'une valeur identique (ΔØ) dans la phase.

3. Circuit pour l'exécution du procédé de la revendication 1 ou 2, dans lequel un système de scrutation (4) avec un dispositif de récupération d'horloge (7), une unité de filtrage (3) et un circuit de décision (10) est raccordé à l'extrémité d'un canal de transmission, caractérisé par le fait
- que l'entrée et la sortie du circuit de décision (10) sont reliés à un totalisateur (11) à partir duquel on établit la valeur de la différence (D) entre le signal d'entrée (ES) et le signal de sortie (AS) du circuit de décision (10) et
- qu'une unité de contrôle (12) est raccordée au totalisateur (11), à laquelle est retransmise la valeur de différence (D) du totalisateur (11) et qui détermine en permanence la valeur moyenne des différences (D), et
- qu'un déphaseur (8) couplé au dispositif de récupération d'horloge (7) et déplaçant l'instant de scrutation est raccordé à l'unité de contrôle (12) et que l'unité de contrôle (12) est conçue de telle manière qu'elle décale la phase du déphaseur (8) chaque fois que la valeur moyenne de la phase est stabilisée, de la valeur (ΔØ) obtenue à chaque fois par comparaison de la nouvelle valeur moyenne stabilisée (M(i)) avec l'ancienne valeur stabilisée (M(i-1)) utilisée pour le précédent décalage du déphaseur (8), et que le décalage de la phase dans le cas où la nouvelle valeur moyenne (M(i)) est inférieure à l'ancienne valeur moyenne (M(i-1)) s'effectue dans la même direction que précédemment, et dans le cas où la nouvelle valeur moyenne (M(i)) est supérieure dans la direction opposée.

4. Utilisation du procédé selon les revendications 1 et 2 pour la transmission d'informations par câble.

5. Utilisation du procédé selon les revendications 1 et 2 pour la transmission d'informations par un câble électrique composé de fils conducteurs métalliques doubles symétriques.
